# EUROPÄISCHE PATENTSCHRIFT

(11) **EP 3 134 681 B1**
(45) Veröffentlichungstag und Bekanntmachung des Hinweises auf die Patenterteilung: **07.03.2018**
(21) Anmeldenummer: 15778915.7
(22) Anmeldetag: 08.10.2015
(51) Int. Cl.: F23R 3/28, F23R 3/36, F23D 17/00

(54) **BRENNSTOFFDÜSENKÖRPER**
FUEL NOZZLE BODY
CORPS DE BUSE DE COMBUSTIBLE

(30) Priorität: 13.10.2014 DE 102014220689
(43) Veröffentlichungstag der Anmeldung: 01.03.2017
(73) Patentinhaber: Siemens Aktiengesellschaft, 80333 München (DE)
(72) Erfinder: BECK, Christian, 45131 Essen (DE); BÖTTCHER, Andreas, 40822 Mettmann (DE); GRANDT, Christopher, 45145 Essen (DE); HAUSER, Thomas, 15344 Strausberg (DE); LAPP, Patrick, 10367 Berlin (DE); REICH, Stefan, 40210 Düsseldorf (DE)
(86) Internationale Anmeldenummer: PCT/EP2015/073283
(87) Internationale Veröffentlichungsnummer: WO 2016/058903

(56) Entgegenhaltungen:
- DD-A3- 249 612
- US-A- 5 410 884
- US-A1- 2004 129 001
- US-A1- 2010 319 353
- US-A1- 2013 031 907

## Beschreibung

Die Erfindung betrifft einen Brennstoffdüsenkörper, insbesondere für einen Brenner einer Gasturbine, und bezieht sich auf die Kompensation thermischer Dehnungen. Die Erfindung betrifft ferner einen Brenner sowie eine Gasturbine.

Eine Brennstoffdüse bzw. ein Brennstoffdüsenkörper für den Gas- und Ölbetrieb ist je nach Betriebsart unterschiedlichen Temperaturen ausgesetzt, weshalb Maßnahmen zur thermischen Kompensation notwendig sind. Eine solche Maßnahme ist die Anbringung eines Bellow-Kompensators an geeigneter Stelle, was aus Platzgründen oft nicht zu realisieren und wenn doch, vergleichsweise teuer ist. US 5410884 beschreibt einen Brennstoffdüsenkörper mit den Merkmalen des Oberbegriffs des Anspruchs 1. Aufgabe der Erfindung ist es daher, einen Brennstoffdüsenkörper anzugeben, bei dem das Problem der thermischen Kompensation kostengünstig gelöst ist. Weitere Aufgaben der Erfindung sind die Angaben eines entsprechenden Brenners bzw. einer entsprechenden Gasturbine.

Die auf den Brennstoffdüsenkörper gerichtete Aufgabe wird durch die Angabe eines Brennstoffdüsenkörpers nach Anspruch 1 gelöst. Die auf den Brenner bezogene Aufgabe wird durch die Angabe eines Brenners nach Anspruch 12 gelöst. Die auf die Gasturbine bezogene Aufgabe wird durch die Angabe einer Gasturbine nach Anspruch 13 gelöst. Die abhängigen Ansprüche enthalten vorteilhafte Ausgestaltungen der Erfindung.

Der Brennstoffdüsenkörper mit einem rückwärtigen Ende und einem vorderen Ende umfasst nach der Erfindung eine sich vom rückwärtigen Ende zum vorderen Ende erstreckende äußere Röhre mit radialen Öffnungen für einen ersten Brennstoff im Bereich des vorderen Endes und eine zur äußeren Röhre konzentrisch angeordnete innere Röhre, die im Bereich des vorderen Endes in einen Düsenkopf mündet, der weitere Öffnungen für einen zweiten Brennstoff aufweist, wobei im Bereich des vorderen Endes die innere Röhre durch zwei Passungen, die axial zwischen den radialen Öffnungen und den weiteren Öffnungen angeordnet sind, in der äußeren Röhre geführt ist.

Der Brennstoffdüsenkörper ist also mit einer selbstregelnden Kompensationseinheit ausgeführt. Die innere Röhre ist verschiebbar in der äußeren Röhre, die zusammen mit der inneren Röhre einen Ringkanal bildet, gelagert und so ausgelegt, dass sie die maximalen thermischen Dehnungen der beiden Systeme ausgleichen kann.

Der erfinderische Brennstoffdüsenkörper ist durch zwei Passungen gekennzeichnet.

Die den radialen Öffnungen nächste, erste Passung ist als um die innere Röhre umlaufender Steg ausgeführt. Diese Form ist einfach und wirksam.

Damit der an der ersten Passung durchgelassene Brennstoff in die Brennkammer abgegeben werden kann, ist gemäß der Erfindung, die zweite Passung mit mindestens einer Unterbrechung auf dem Umfang ausgeführt, d.h. beispielsweise sternförmig, so dass die zweite Passung nicht am gesamten Umfang an der Innenseite der äußeren Röhre anliegt, sondern nur in einzelnen Segmenten, oder als umlaufender Steg, ähnlich der ersten Passung, aber mit Unterbrechungen. In den offen gelassenen Bereichen kann der "Leckage-Brennstoff" sicher an der zweiten Passung vorbei und in die Brennkammer strömen.

In einer vorteilhaften Ausführungsform der Erfindung weist die erste Passung engere Passungsanforderungen auf, als die zweite Passung. Insbesondere ist für die erste Passung (auch Leckage-Passung) ein im Vergleich zur zweiten Passung größerer Spalt, jedoch mit engerer Passung, definiert, der folglich eine vergleichsweise große Leckage (beispielsweise bis zu 5% bezogen auf vorhandene Injektionslöcher) zulässt, jedoch nur eine Streuung <1% über alle Injektoren ermöglicht. So kann ein möglichst geringer Einfluss auf das Gas/Luftgemisch sichergestellt werden.

In einer weiteren vorteilhaften Ausführungsform weist die zweite Passung einen engeren Spalt als die erste Passung auf. Der engere Spalt in der zweiten Passung bewirkt, dass ein ansonsten zu erwartender Abrieb im Bereich der ersten Passung, d.h. der Leckage-Passung, vermieden wird. Damit wird eine möglichst dauerhaft stabile Leckage-Passung über die gesamte Betriebsdauer gewährleistet, indem die erste Passung in keinem Fall zur äußeren Röhre Kontakt hat und somit immer ein Ringspalt realisiert wird.

Damit die beiden Röhren dauerhaft optimal ineinander geführt werden können, ist es weiterhin vorteilhaft, wenn die zweite Passung verchromt ist.

Alternativ kann es vorteilhaft sein, wenn die zweite Passung gehärtet ist, so dass die zweite Passung an ihrer Oberfläche eine höhere Härte aufweist als ihr Trägermaterial.

Hinsichtlich des Düsenkopfes ist es vorteilhaft, wenn dieser mit der inneren Röhre lösbar verbunden ist. Dies erlaubt den einfacheren und kostengünstigeren Tausch bei Servicearbeiten.

In einer vorteilhaften Ausführungsform ragt im Bereich des vorderen Endes die innere Röhre aus der äußeren Röhre heraus und auf dem aus der äußeren Röhre ragenden Teil der inneren Röhre ist ein umlaufender Steg angeordnet.

Dieser Steg kann als Anlage für den Düsenkopf verwendet werden.

Alternativ kann ein solcher Steg aber auch in Kombination mit einer Hülse, die an ihrem ersten Ende mit dem vorderen Ende der äußeren Röhre lösbar verbunden ist und an ihrem zweiten Ende mit einem radial nach innen gerichteten Bord den umlaufenden Steg der inneren Röhre hintergreift, als Verliersicherung für die innerer Röhre dienen.

Dabei ist es zweckmäßig, wenn die Hülse strömungsoptimiert ausgeführt ist.

Bevorzugt ist die innere Röhre eine Ölleitung und dient der Versorgung des Düsenkopfes.

Weiterhin bevorzugt ist der durch innere und äußere Röhre gebildete Ringkanal eine Gasleitung.

Ein erfindungsgemäßer Brenner, der insbesondere ein Gasturbinenbrenner sein kann, ist mit einem erfindungsgemäßen Brennstoffdüsenkörper ausgestattet.

Vorteilhafter Weise umfasst eine Gasturbine mit einem Verdichter, einer Turbine, sowie einer Brennkammer einen solchen Brenner.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.
- Figur 1: zeigt das Schema einer Gasturbine,
- Figur 2: zeigt die Ansicht eines Strahlbrenners,
- Figur 3: zeigt einen Brennstoffdüsenkörper mit Öl- und Gaseindüsung nach dem Stand der Technik ohne thermische Kompensationsfunktion,
- Figur 4: zeigt einen Brennstoffdüsenkörper mit Öl- und Gaseindüsung nach der Erfindung mit thermischer Kompensationsfunktion,

- Figur 5: zeigt eine innere Röhre im Bereich des vorderen Endes in perspektivischer Ansicht,
- Figur 6: zeigt eine innere Röhre im Bereich des vorderen Endes im Schnitt,
- Figur 7: zeigt eine äußere Röhre im Bereich des vorderen Endes im Schnitt,
- Figur 8: zeigt das vordere Ende des Brennstoffdüsenkörpers in perspektivischer Ansicht,
- Figur 9: zeigt das vordere Ende des Brennstoffdüsenkörpers im Schnitt und
- Figur 10: zeigt das vordere Ende des Brennstoffdüsenkörpers mit Verlierhülse.

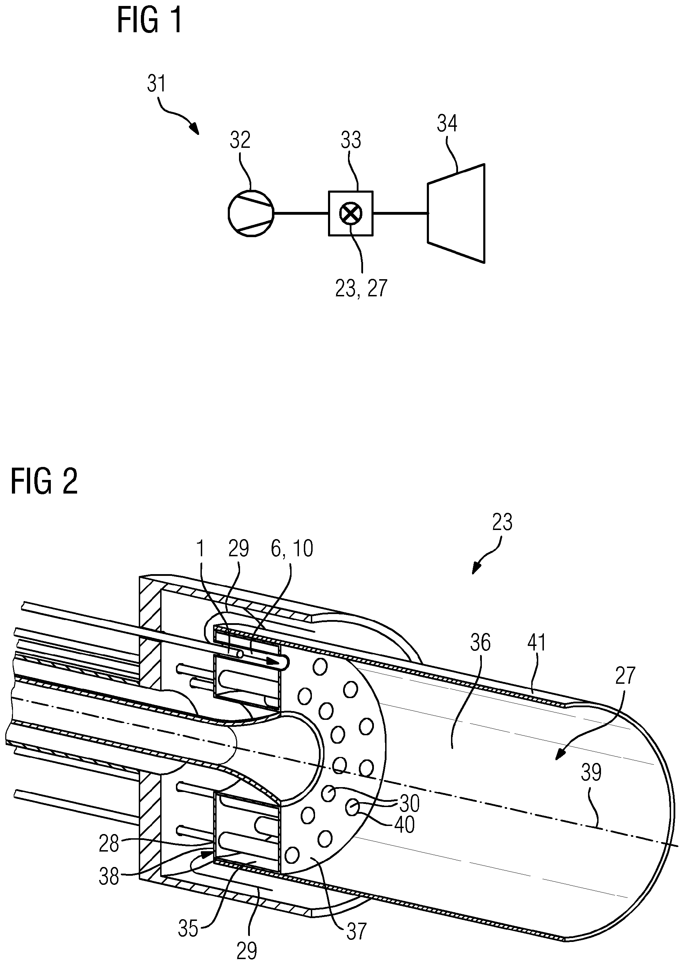

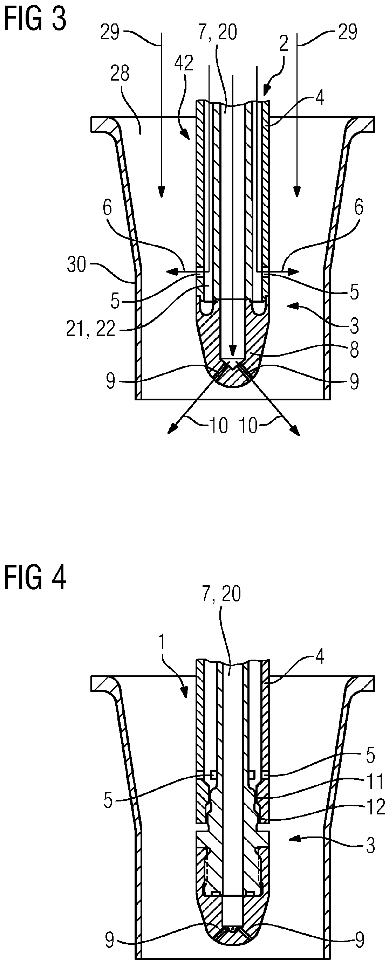

Die Figur 1 zeigt schematisch eine Gasturbine 31. Diese umfasst einen Verdichterabschnitt 32, einen Brennkammerabschnitt 33 und einen Turbinenabschnitt 34, sowie eine Brennkammer 27 mit mindestens einem Brenner 23 im Bereich des Brennkammerschnittes 33. In Figur 2 ist ein solcher Brenner 23 näher beschrieben. Der Brenner 23 weist einen Brennstoffdüsenkörper 1 auf, der in den Figuren 3 bis 10 näher beschrieben ist.

Im Betrieb der Gasturbine 31 wird Luft durch einen Lufteinlass des Verdichterabschnitts 32 eingesaugt und dort komprimiert. Die komprimierte Luft wird Brennkammern 27 zugeführt, die im Brennkammerschnitt 33 angeordnet sind. In die Brennkammern 27 wird über Brenner 23 bzw. Brennstoffdüsen auch ein gasförmiger oder flüssiger Brennstoff, beispielsweise Gas oder Öl, eingedüst. Dabei umfassen Brennstoffdüsenkörper Brennstoffdüsen/Öffnungen für flüssige und gasförmige Brennstoffe. Das entstehende Luft/Brennstoffgemisch wird gezündet und in den Brennkammern 27 verbrannt. Die heißen Verbrennungsabgase strömen vom Brennkammerabschnitt 33 in den Turbinenabschnitt 34, wo sie expandieren und abkühlen.

Die Figur 2 zeigt schematisch und beispielhaft einen Brenner 23, insbesondere einen Strahlbrenner, im Schnitt mit einem sogenannten Düsenträger 35. Der Düsenträger 35 umfasst eine im Betrieb einer Verbrennungszone 36 zugewandte Heißseite 37 und eine gegenüberliegende, von der Verbrennungszone 36 abgewandte Kaltseite 38, wobei sich Vormischröhren 30 im Düsenträger 35 von der Kaltseite 38 zur Heißseite 37, also parallel zur Hauptachse 39 des Brenners 23 erstrecken, mit je einem Eingang 28 zu einer Vormischstrecke auf der Kaltseite 38 und einem Auslass 40 auf der Heißseite 37.

Die Vormischröhren 30 dienen als Strahldüsen, die im vorliegenden Beispiel auf zwei Kreisen angeordnet sind und an deren Eingängen 28 Brennstoffdüsenkörper 1 angeordnet sind. Im Betrieb strömen ein Brennstoff 6, 10 und Verdichterluft 29 durch die Strahldüsen, d.h. die Vormischröhren 30, und gelangen an den Auslässen 40 der Strahldüsen als Brennstoff-LuftGemisch in die durch eine Ummantelung 41 begrenzte Brennkammer 27.

Die Figur 3 zeigt schematisch und beispielhaft einen Brennstoffdüsenkörper 42 mit Öl- und Gaseindüsung nach dem Stand der Technik. Der Brennstoffdüsenkörper 42 hat ein rückwärtiges Ende 2 für die Brennstoffzufuhr zum Brennstoffdüsenkörper 42 und ein vorderes Ende 3 mit verschiedenen Brennstoffen zugeordneten Öffnungen 5, 9. Insbesondere umfasst der Brennstoffdüsenkörper 42 eine sich vom rückwärtigen Ende 2 zum vorderen Ende 3 erstreckende äußere Röhre 4 mit radialen Öffnungen 5 für einen ersten Brennstoff 6 im Bereich des vorderen Endes 3 und eine zur äußeren Röhre 4 konzentrisch angeordnete innere Röhre 7, die im Bereich des vorderen Endes 3 in einen Düsenkopf 8 mündet, der weitere Öffnungen 9 für einen zweiten Brennstoff 10 aufweist. Der Brennstoffdüsenkörper 42 ist am Eingang 28 einer Vormischstrecke angeordnet. Im Betrieb strömt komprimierte Luft 29 am Brennstoffdüsenkörper 42 vorbei in eine Vormischröhre 30. Im Gasbetrieb wird gasförmiger Brennstoff 6 durch den Ringkanal 21 geführt, der durch die innere 7 und die äußere Röhre 4 gebildet wird, und über die radialen Öffnungen 5 in den den Brennstoffdüsenkörper 42 umgebenden Luftstrom 29 eingedüst. Im Ölbetrieb erfolgt die Ölzufuhr über die innere Röhre 7 und den Düsenkopf 8 mit den weiteren Öffnungen 9 für die Eindüsung von Öl 10 in den umgebenden Luftstrom 29. Der Ringkanal 21 fungiert somit als Gasleitung 22 und die innerer Röhre 7 als Ölleitung 20.

Figur 4 zeigt einen Brennstoffdüsenkörper 1 nach der Erfindung mit thermischer Kompensationsfunktion, die dadurch erreicht wird, dass im Bereich des vorderen Endes 3 die innere Röhre 7 durch zwei Passungen 11, 12, die axial zwischen den radialen Öffnungen 5 und den weiteren Öffnungen 9 angeordnet sind, in der äußeren Röhre 4 geführt ist.

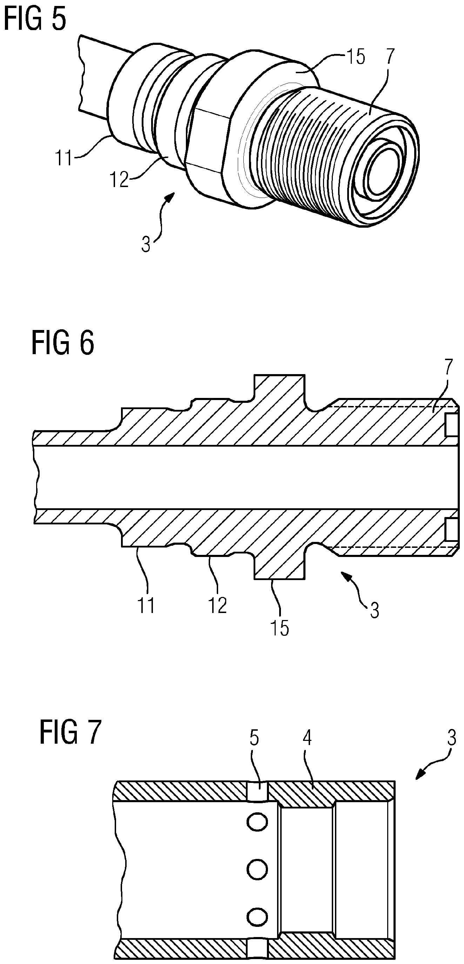

Figuren 5 und 6 zeigen die innere Röhre 7 im Bereich des vorderen Endes 3 in perspektivischer Ansicht und im Schnitt. Zu sehen sind die erste Passung 11, die zweite Passung 12, sowie ein umlaufender Steg 15. Figur 7 zeigt das "Gegenstück", die äußerer Röhre 4 mit den radialen Öffungen 5 für den ersten Brennstoff 6.

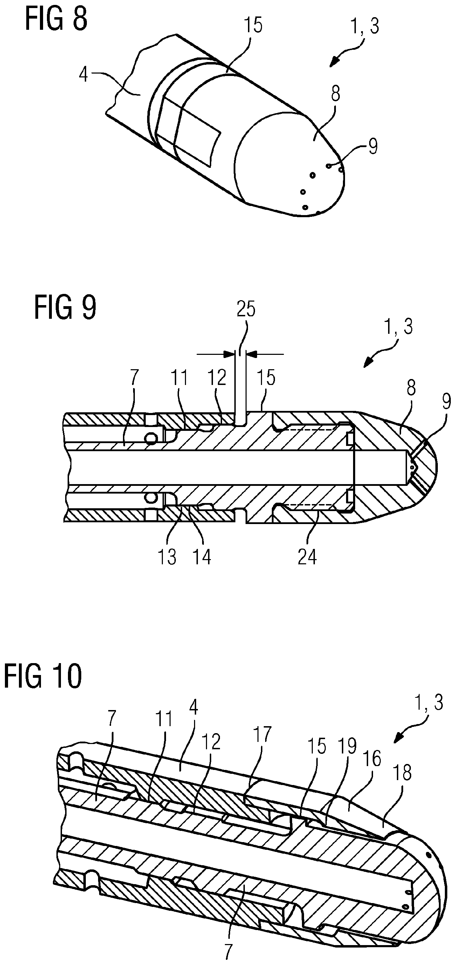

Die Figuren 8 und 9 zeigen das vordere Ende 3 des Brennstoffdüsenkörpers 1 in perspektivischer Ansicht und im Schnitt.

In Figur 8 sind im Wesentlichen die äußere Röhre 4, ein Steg 15 der inneren Röhre 7 und der Düsenkopf 8 mit den weiteren Öffnungen 9 für den weiteren Brennstoff 10 zu sehen.

In der Figur 9 ist zu sehen, dass der Düsenkopf 8 mit der inneren Röhre 7 lösbar verbunden, im gezeigten Beispiel geschraubt ist (siehe Verschraubung 24). Die Spaltdichtung 14 der ersten Passung 11 ist so ausgeführt, dass im Betrieb eine minimale kontrollierte Leckage erfolgt. Insbesondere soll weniger als 5% Leckage bezogen auf den gesamten Eindüsungsbereich über die erste Passung 11 erfolgen. Die zweite Passung 12 ist so ausgelegt, dass sie in jedem Lastfall eine engere Passung garantiert als die erste Passung 11, auch Leckagepassung genannt, und somit kein Kontakt der ersten Passung 11 zur Innenseite der äußeren Röhre 4 entsteht, so dass die Leckage über die erste Passung 11 definiert ist. Insbesondere ist die zweite Passung 12 enger als die erste Passung 11 toleriert. Damit das funktioniert, darf die Passung 12 nicht wie Passung 11 als umlaufender Steg 13 um den ganzen Umfang anliegen. Aus diesem Grund ist zweite Passung 12 sternförmig ausgeführt (in der Schnittzeichnung der Figur 9 nicht zu sehen, aber in der Ausführungsform der Figur 10).

In Figur 9 ist ferner zu sehen, dass im Bereich des vorderen Endes 3 die innere Röhre 7 aus der äußeren Röhre 4 herausragt. Der auf dem aus der äußeren Röhre 4 ragenden Teil der inneren Röhre 7 angeordnete umlaufende Steg 15 ist auch in der Figur 8 zu erkennen. Dieser Steg 15 kann als Anlage für den Düsenkopf 8 verwendet werden. Figur 9 zeigt den Dehnungsweg 25 zwischen dem vorderen Ende der äußeren Röhre 4 und dem Steg 15.

Figur 10 zeigt eine alternative Verwendung für den Steg 15. Hierbei ist eine Hülse 16 an ihrem ersten Ende 17 mit dem vorderen Ende 3 der äußeren Röhre 4 lösbar verbunden, z.B. verschraubt. An ihrem zweiten Ende 18 hintergreift die Hülse 16 mit einem radial nach innen gerichteten Bord 19 den umlaufenden Steg 15 der inneren Röhre 7. Die Hülse 16 soll einen Verlust der inneren Röhre 7 verhindern. Figur 10 zeigt ferner, dass die Hülse 16 strömungsoptimiert ausgeführt ist und sich zum vorderen Ende 3 hin verjüngt.

## Patentansprüche

1. Brennstoffdüsenkörper (1) mit einem rückwärtigen Ende (2) und einem vorderen Ende (3), umfassend eine sich vom rückwärtigen Ende (2) zum vorderen Ende (3) erstreckende äußere Röhre (4) mit radialen Öffnungen (5) für einen ersten Brennstoff (6) im Bereich des vorderen Endes (3) und eine zur äußeren Röhre (4) konzentrisch angeordnete innere Röhre (7), die im Bereich des vorderen Endes (3) in einen Düsenkopf (8) mündet, der weitere Öffnungen (9) für einen zweiten Brennstoff (10) aufweist, **dadurch gekennzeichnet, dass** im Bereich des vorderen Endes (3) die innere Röhre (7) durch zwei Passungen (11, 12), die axial zwischen den radialen Öffnungen (5) und den weiteren Öffnungen (9) angeordnet sind, in der äußeren Röhre (4) geführt ist, dass die den radialen Öffnungen (5) nächste, erste Passung (11) als um die innere Röhre (7) umlaufender Steg (13) ausgeführt ist und wobei die zweite Passung (12) mit mindestens einer Unterbrechung auf dem Umfang ausgeführt ist.

2. Brennstoffdüsenkörper (1) nach Anspruch 1, wobei die erste Passung (11) engere Passungsanforderungen aufweist als die zweite Passung (12).

3. Brennstoffdüsenkörper (1) nach einem der vorhergehenden Ansprüche, wobei die zweite Passung (12) einen engeren Spalt als die erste Passung (11) aufweist.

4. Brennstoffdüsenkörper (1) nach einem der vorhergehenden Ansprüche, wobei die zweite Passung (12) verchromt ist.

5. Brennstoffdüsenkörper (1) nach einem der vorhergehenden Ansprüche, wobei die zweite Passung (12) gehärtet ist.

6. Brennstoffdüsenkörper (1) nach einem der vorhergehenden Ansprüche, wobei der Düsenkopf (8) mit der inneren Röhre (7) lösbar verbunden ist.

7. Brennstoffdüsenkörper (1) nach einem der vorhergehenden Ansprüche, wobei im Bereich des vorderen Endes (3) die innere Röhre (7) aus der äußeren Röhre (4) herausragt und auf dem aus der äußeren Röhre (4) ragenden Teil der inneren Röhre (7) ein umlaufender Steg (15) angeordnet ist.

8. Brennstoffdüsenkörper (1) nach Anspruch 7, wobei eine Hülse (16) an ihrem ersten Ende (17) mit dem vorderen Ende (3) der äußeren Röhre (4) lösbar verbunden ist und an ihrem zweiten Ende (18) mit einem radial nach innen gerichteten Bord (19) den umlaufenden Steg (15) der inneren Röhre (7) hintergreift.

9. Brennstoffdüsenkörper (1) nach Anspruch 8, wobei die Hülse (16) strömungsoptimiert ausgeführt ist.

10. Brennstoffdüsenkörper (1) nach einem der vorhergehenden Ansprüche, wobei die innere Röhre (7) eine Ölleitung (20) ist.

11. Brennstoffdüsenkörper (1) nach einem der vorhergehenden Ansprüche, wobei der durch innere (7) und äußere Röhre (4) gebildete Ringkanal (21) eine Gasleitung (22) ist.

12. Brenner (23) mit einem Brennstoffdüsenkörper (1) nach einem der vorhergehenden Ansprüche.

13. Gasturbine (24) mit einem Verdichter (25), einer Turbine (26), sowie einer Brennkammer (27) mit mindestens einem Brenner (23) nach Anspruch 12.

## Claims

1. Fuel nozzle body (1) having a rearward end (2) and a forward end (3), comprising an outer tube (4), which extends from the rearward end (2) to the forward end (3) and has radial openings (5) for a first fuel (6) in the region of the forward end (3), and an inner tube (7), which is arranged concentrically with respect to the outer tube (4) and which opens in the region of the forward end (3) into a nozzle head (8), which has additional openings (9) for a second fuel (10), **characterized in that**, in the region of the forward end (3), the inner tube (7) is guided in the outer tube (4) by two fits (11, 12), which are arranged axially between the radial openings (5) and the additional openings (9), **in that** the first fit (11), which is closest to the radial openings (5), is embodied as a web (13) encircling the inner tube (7), and wherein the second fit (12) is embodied with at least one interruption on the circumference.

2. Fuel nozzle body (1) according to Claim 1, wherein the first fit (11) has stricter fit requirements than the second fit (12).

3. Fuel nozzle body (1) according to one of the preceding claims, wherein the second fit (12) has a narrower gap than the first fit (11).

4. Fuel nozzle body (1) according to one of the preceding claims, wherein the second fit (12) is chrome-plated.

5. Fuel nozzle body (1) according to one of the preceding claims, wherein the second fit (12) is hardened.

6. Fuel nozzle body (1) according to one of the preceding claims, wherein the nozzle head (8) is detachably connected to the inner tube (7).

7. Fuel nozzle body (1) according to one of the preceding claims, wherein the inner tube (7) projects from the outer tube (4) in the region of the forward end (3), and an encircling web (15) is arranged on that part of the inner tube (7) which projects from the outer tube (4).

8. Fuel nozzle body (1) according to Claim 7, wherein a sleeve (16) is detachably connected at its first end (17) to the forward end (3) of the outer tube (4) and, at its second end (18), engages behind the encircling web (15) of the inner tube (7) by means of a radially inward-oriented flange (19).

9. Fuel nozzle body (1) according to Claim 8, wherein the sleeve (16) is embodied in a manner optimized in terms of flow.

10. Fuel nozzle body (1) according to one of the preceding claims, wherein the inner tube (7) is an oil line (20).

11. Fuel nozzle body (1) according to one of the preceding claims, wherein the annular channel (21) formed by the inner (7) and the outer tube (4) is a gas line (22).

12. Burner (23) having a fuel nozzle body (1) according to one of the preceding claims.

13. Gas turbine (24) having a compressor (25), a turbine (26) and a combustion chamber (27) having at least one burner (23) according to Claim 12.

## Revendications

1. Corps (1) de buse de combustible ayant une extrémité (2) tournée vers l'arrière et une extrémité (3) avant, comprenant un tube (4) extérieur, s'étendant de l'extrémité (2) tournée vers l'arrière à l'extrémité (3) avant et ayant des ouvertures (5) radiales pour un premier combustible (6) dans la partie de l'extrémité (3) avant et un tube (7) intérieur, qui est disposé concentriquement au tube (4) extérieur et qui, dans la partie de l'extrémité (3) avant, débouche dans une tête (8) de buse, qui a d'autres ouvertures (9) pour un deuxième combustible (10), **caractérisé en ce que**, dans la partie de l'extrémité (3) avant, le tube (7) intérieur est guidé dans le tube (4) extérieur par deux ajustements (11, 12), qui sont disposés axialement entre les ouvertures (5) radiales et les autres ouvertures (9), **en ce que** le premier ajustement (11), le plus proche des ouvertures (5) radiales, est réalisé sous la forme d'une nervure (13) faisant le tour du tube (7) intérieur et dans lequel le deuxième ajustement (12) est réalisé par au moins une interruption sur le pourtour.

2. Corps (1) de buse de combustible suivant la revendication 1, dans lequel le premier ajustement (11) a des exigences d'ajustement plus strictes que le deuxième ajustement (12).

3. Corps (1) de buse de combustible suivant l'une des revendications précédentes, dans lequel le deuxième ajustement (12) a un intervalle plus étroit que le premier ajustement (11).

4. Corps (1) de buse de combustible suivant l'une des revendications précédentes, dans lequel le deuxième ajustement (12) est chromé.

5. Corps (1) de buse de combustible suivant l'une des revendications précédentes, dans lequel le deuxième ajustement (12) est durci.

6. Corps (1) de buse de combustible suivant l'une des revendications précédentes, dans lequel la tête (8) de buse est reliée de manière amovible au tube (7) intérieur.

7. Corps (1) de buse de combustible suivant l'une des revendications précédentes, dans lequel, dans la région de l'extrémité (3) avant, le tube (7) intérieur est en saillie du tube (4) extérieur et, sur la partie, dépassant du tube (4) extérieur, du tube (7) intérieur, est prévue une nervure (15) faisant le tour.

8. Corps (1) de buse de combustible suivant la revendication 7, dans lequel une douille (16) est reliée de manière amovible à sa première extrémité (17) à l'extrémité (3) avant du tube (4) extérieur et à sa deuxième extrémité (18) vient derrière un bord (19) dirigé radialement vers l'intérieur de la nervure (15) faisant le tour du tube (7) intérieur.

9. Corps (1) de buse de combustible suivant la revendication 8, dans lequel la douille (16) est réalisée de manière à optimiser un écoulement.

10. Corps (1) de buse de combustible suivant l'une des revendications précédentes, dans lequel le tube (7) intérieur est un conduit (20) pour du pétrole.

11. Corps (1) de buse de combustible suivant l'une des revendications précédentes, dans lequel le canal (21) annulaire, formé par le tube (7) intérieur et le tube (4) extérieur, est un conduit (22) pour du gaz.

12. Brûleur (23) comprenant un corps (1) de buse de combustible suivant l'une des revendications précédentes.

13. Turbine (24) à gaz, comprenant un compresseur (25), une turbine (26) ainsi qu'une chambre de combustion (27) ayant au moins un brûleur (23) suivant la revendication 12.
